(19) Europäisches Patentamt
European Patent Office
Office européen des brevets

(11) EP 4 654 095 A1

(12) EUROPEAN PATENT APPLICATION
published in accordance with Art. 153(4) EPC

(43) Date of publication:
**26.11.2025 Bulletin 2025/48**

(21) Application number: **24744701.4**

(22) Date of filing: **18.01.2024**

(51) International Patent Classification (IPC):
***G06N 20/00*** *(2019.01)*

(52) Cooperative Patent Classification (CPC):
**G06N 20/00; G06Q 10/04**

(86) International application number:
**PCT/JP2024/001293**

(87) International publication number:
**WO 2024/154781 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.01.2023 JP 2023006647**

(71) Applicants:
- **The University of Tokyo**
  **Bunkyo-ku, Tokyo 113-8654 (JP)**
- **Daicel Corporation**
  **Osaka-shi, Osaka 530-0011 (JP)**

(72) Inventors:
- **OKAMOTO, Hiroshi**
  **Tokyo 113-8654 (JP)**
- **TAKAHASHI, Marina**
  **Tokyo 113-8654 (JP)**
- **SHINOHARA, Shuji**
  **Tokyo 113-8654 (JP)**
- **HAITSUKA, Masahiro**
  **Tokyo 108-8230 (JP)**
- **KUMATA, Kenji**
  **Tokyo 108-8230 (JP)**
- **KOMINE, Yusuke**
  **Tokyo 108-8230 (JP)**
- **TAKETSUGU, Yuki**
  **Tokyo 108-8230 (JP)**
- **NAKAI, Yoshito**
  **Tokyo 108-8230 (JP)**

(74) Representative: **Grünecker Patent- und Rechtsanwälte PartG mbB**
**Leopoldstraße 4**
**80802 München (DE)**

# (54) REGRESSION ANALYSIS METHOD, REGRESSION ANALYSIS SYSTEM, AND REGRESSION ANALYSIS PROGRAM

(57) A more versatile technique is provided for constructing a regression model having a correspondence relationship with variation of an explanatory variable and variation of a response variable. A regression analysis method includes: retrieving, by a computer, training data from a storage device storing the training data, the training data being used as a response variable and an explanatory variable of a regression model; and performing, by the computer, machine learning by the regression model using the training data to minimize a cost function including a regularization term. The regularization term includes a first term that increases a cost more in an interval where a coefficient is positive than in an interval where the coefficient is negative, and a second term that increases the cost more in the interval where the coefficient is negative than in the interval where the coefficient is positive.

EP 4 654 095 A1

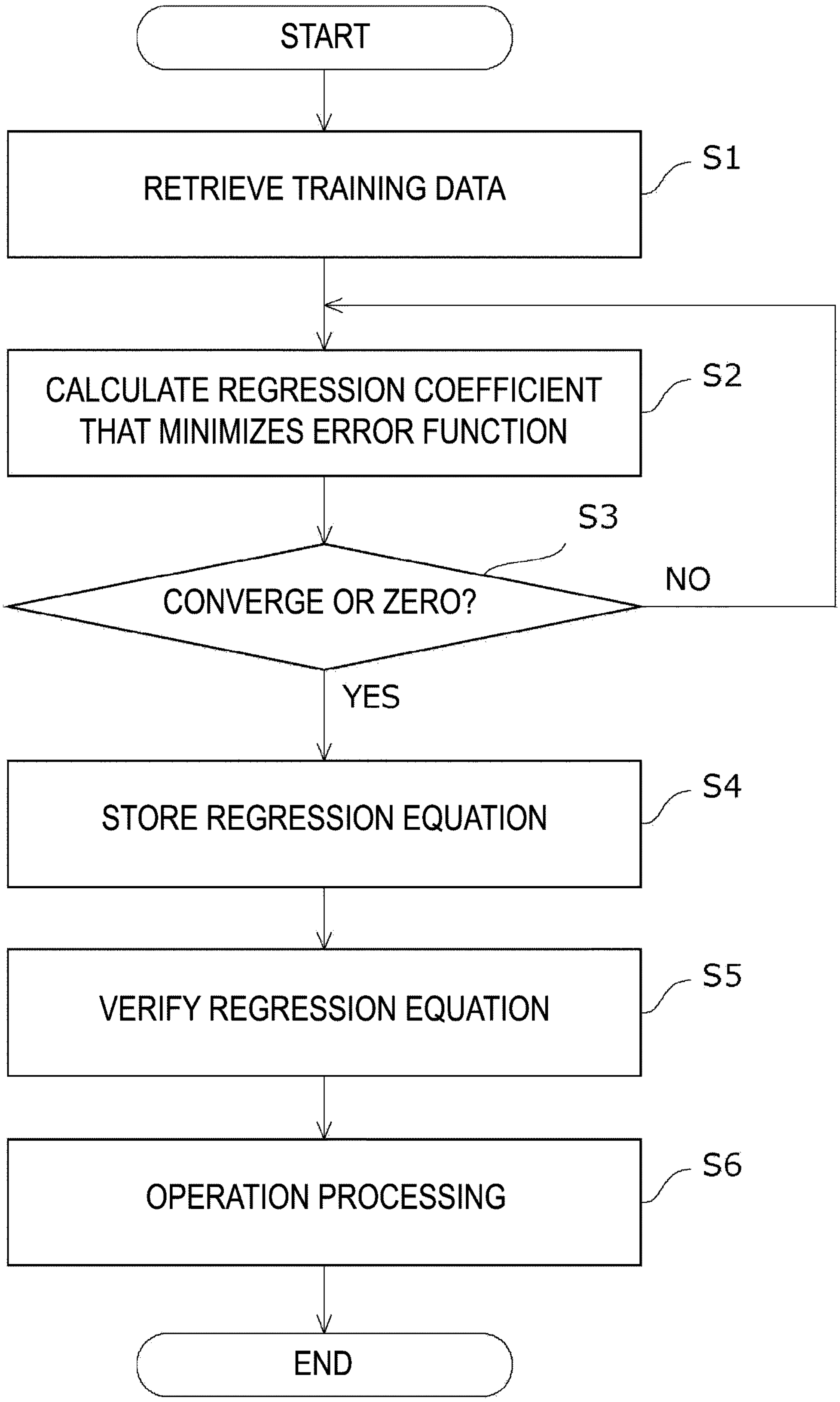
START
RETRIEVE TRAINING DATA
S1
CALCULATE REGRESSION COEFFICIENT THAT MINIMIZES ERROR FUNCTION
S2
S3
CONVERGE OR ZERO?
NO
YES
STORE REGRESSION EQUATION
S4
VERIFY REGRESSION EQUATION
S5
OPERATION PROCESSING
S6
END

FIG. 6

## Description

### Technical Field

The present disclosure relates to a regression analysis method, a regression analysis system, and a regression analysis program.

### Background Art

In the related art, when a parameter of a regression model is estimated by a least-square method, there is a problem: an appropriate least-square estimator cannot be obtained, for example, when the number of samples of data is small. For solving the problem, a technique for providing a constraint condition called L1 norm has been proposed (e.g., Non-Patent Literature 1). According to Least Absolute Shrinkage and Selection Operator (LASSO), which is a parameter estimation technique using the L1 norm as the constraint condition, selection of an explanatory variable appropriate for describing a response variable and determination of a coefficient are performed together.

Furthermore, a regression analysis device has been proposed (for example, Patent Document 1) that includes a data acquisition unit that retrieves training data and a constraint condition from a storage device storing the training data and the constraint condition, the training data being used as a response variable and an explanatory variable of a regression model, the constraint condition defining in advance whether the explanatory variable should be varied positively or negatively to vary the response variable in a positive direction or a negative direction; and a coefficient update unit that repeatedly updates, using the training data, a coefficient of the explanatory variable in the regression model to minimize a cost function including a regularization term that increases a cost in a case where the constraint condition is contravened (signed regularization).

### Citation List

#### Patent Document

Patent Document 1: WO 2021/157670

#### Non-Patent Literature

Non-Patent Literature 1: Robert Tibshirani, "Regression Shrinkage and Selection via the Lasso", Journal of the Royal Statistical Society. Series B (Methodological) Vol. 58, No. 1 (1996), pp. 267-288

### Summary of Invention

#### Technical Problem

In the related art, a regression analysis device has been proposed that can accurately perform machine learning even with a relatively small amount of training data by determining a constraint condition that defines in advance whether an explanatory variable is to be varied to positive or negative in order to vary a response variable in a positive or negative direction. However, time and effort are required to prepare an appropriate constraint condition depending on a target on which regression analysis is performed. Thus, an object of the present technology is to provide a more versatile technique for constructing a regression model having a correspondence relationship with variation of an explanatory variable and variation of a response variable.

#### Solution to Problem

##### Aspect 1

A regression analysis method includes: retrieving, by a computer, training data from a storage device storing the training data, the training data being used as a response variable and an explanatory variable of a regression model; and performing, by the computer, machine learning by the regression model using the training data to minimize a cost function including a regularization term. The regularization term includes a first term that increases a cost more in an interval where a coefficient of the explanatory variable is positive than in an interval where the coefficient is negative, and a second term that increases the cost more in the interval where the coefficient is negative than in the interval where the coefficient is positive.

Aspect 2

In the first aspect, the first term and the second term may include a parameter for zeroing either the first term or the second term or approximating either the first term or the second term to zero, and the parameter and a regression coefficient in the regression model may be repeatedly updated in the machine learning.

Aspect 3

In the second aspect, the parameter may be a binary variable, and the parameter may constitute a factor of the first term, the factor being zero in a case where the parameter takes one of two values of the binary variable, and constitute a factor of the second term, the factor being zero in a case where the parameter takes the other of the two values of the binary variable.

Aspect 4

In the third aspect, on the assumption that the binary variable is a value that approximates a growth curve, the regression coefficient and the parameter may be calculated to minimize the cost function.

Aspect 5

In the third or fourth aspect, on the assumption that the binary variable is a value determined based on a magnitude relationship between a predetermined value represented by using the regression coefficient and a random variable, the regression coefficient and the parameter may be calculated to minimize the cost function.

A target to which the regression analysis method is applied may be a facility in a manufacturing industry or a non-manufacturing industry. The explanatory variable may be sensing data output by a production facility. Furthermore, the response variable may be an operation condition of the facility, or a predetermined characteristic value or the degree of abnormality. Note that the contents described in Solution to Problem can be combined as much as possible without departing from the problems and technical idea of the present disclosure. Furthermore, the aspects 1 to 5 can be provided as a system including a device such as a computer or a plurality of devices, a method performed by the computer or system, or a program executed by the computer or system. Note that a recording medium for storing the program may be provided.

Advantageous Effects of Invention

According to the disclosed technology, a more versatile technique can be provided for constructing a regression model having a correspondence relationship with variation of an explanatory variable and variation of a response variable.

Brief Description of Drawings

FIG. 1 is a diagram showing an example of observed values used to create a regression equation.
FIG. 2 is a schematic diagram for explaining a factor "R+(w)".
FIG. 3 is a schematic diagram for explaining a factor "R_(w)".
FIG. 4 is a diagram for explaining approximation of a spin variable $S_k$.
FIG. 5 is a block diagram illustrating an example of a configuration of a regression analysis device.
FIG. 6 is a processing flow chart illustrating an example of regression analysis processing.
FIG. 7 is a diagram showing verification results.

Description of Embodiments

Hereinafter, an embodiment of a regression analysis device will be described with reference to the drawings.

First Embodiment

A regression analysis device according to the present embodiment constructs a regression equation (regression model) representing a relationship between one or more explanatory variables (independent variables) and one response variable (dependent variable). A process of determining a regression coefficient of a regression equation is referred to as "learning". Furthermore, in the present embodiment, a regression equation is constructed that adaptively imposes a constraint under which a direction (positive or negative) of variation in explanatory variable has a certain correspondence relationship with a direction (positive or negative) of variation of the response variable (the constraint is referred to as a "sign constraint"). In other words, learning is performed to provide the regression coefficient with an appropriate sign. In general, with a sufficient number of pieces of training data, a regression equation constructed using the training data has a regression coefficient converged to establish a predetermined correspondence relationship with the direction of variation of the explanatory variable with the direction of variation of the response variable. On the other hand, in a case where the number of pieces of training data is relatively small, a regression equation having a reverse correspondence relationship may be created. The "sign constraint" in the present embodiment is imposed to establish an appropriate correspondence relationship for the regression equation to be created even when the number of pieces of training data is relatively small.

FIG. 1 is a diagram showing an example of observed values used to create a regression equation. The table of FIG. 1 includes a column of K inputs x ($x_1$ to $x_K$) and a column of outputs y. The input x is used as the explanatory variable, and the output y is used as the response variable. Furthermore, a regression equation is created using T records (training data) among a plurality of records representing data points t ($t_1$ to $t_T$, ...), which are individual samples, and a value of data point $t_{T+1}$ is input to the created regression equation, to predict the unknown output y.

The regression equation is represented by, for example, the following Equation (1).

[Math. 1]

$$y = w_0 + \sum_{k=1}^{K} w_k x_k \quad \cdots (1)$$

The regression equation is a linear model, and the output y is expressed as a linear sum of the inputs x. $w_k$ is a regression coefficient and $w_0$ is a constant term. Each of the regression coefficient and the constant term is determined by learning.

For determining the regression coefficient and the constant term, a cost function (error function) E(w, s) expressed by the following Equation (2) can be used.

[Math. 2]

$$\begin{aligned} E(\mathbf{w},\ \mathbf{s}) &= L(\mathbf{w}) + \alpha S(\mathbf{w},\ \mathbf{s}) \\ &= \frac{1}{2N}\sum_{n=1}^{N}\left(y\ \ (n) - \sum_{k=0}^{K} w_k x_k\ (n)\right)^2 \\ &\quad + \alpha \sum_{k=1}^{K} \frac{1}{2}\{(1+s_k)R_+(w_k) + (1-s_k)R_-(w_k)\} \end{aligned} \quad \cdots (2)$$

The cost function E(w, s) is obtained by adding a regularization term (penalty term) S(w, s) to a square error L(w).

The regularization term S(w, s) is expressed by the following Equation (3).

[Math. 3]

$$S(\mathbf{w},\ \mathbf{s}) = \sum_{k=1}^{K} R_{\mathrm{ASL}}(w_k,\ s_k) \quad \cdots (3)$$

where

$$R_{\mathrm{ASL}}(w_k,\ s_k) = \frac{1}{2}\{(1+s_k)R_+(w_k) + (1-s_k)R_-(w_k)\}$$

$$R_+(w) = \begin{cases} w & \text{when} \quad w \geq 0 \\ -Lw & \text{when} \quad w < 0 \end{cases}$$

$$R_-(w) = \begin{cases} Lw & \text{when} \quad w > 0 \\ -w & \text{when} \quad w \leq 0 \end{cases}$$

$R_{ASL}(w_k, s_k)$ includes two terms. In other words, $R_{ASL}(w_k, s_k)$ is expressed by the sum of a first term "(1/2) (1 + $s_k$) $R_+(w_k)$" and a second term "(1/2) (1 - $s_k$) $R_-(w_k)$". Furthermore, $s_k$ is a spin variable and may take one of two values of +1(up) and -1(down). When $S_k$ = +1, the factor "(1 - $s_k$)" of the second term described above is zero. Thus, only the first term remains, and consequently $R_{ASL}(w_k, s_k) = R_+(w_k)$. When $S_k$ = -1, the factor "(1 + $s_k$)" of the first term described above is zero. Thus, only the second term remains, and consequently $R_{ASL}(w_k, s_k) = R_-(w_k)$. In other words, the first term and the second term include a parameter $s_k$ for zeroing either the first term or the second term. Furthermore, the parameter $s_k$, which is a binary variable, constitutes a factor of the first term, the factor being a zero in a case where the variable takes one of two values of the binary variable, and constitutes a factor of the second term, the factor being a zero in a case where the variable takes the other value of the two values of the binary variable. Furthermore, L is a finite, sufficiently large value that is an approximate value of infinity.

FIG. 2 is a schematic diagram for explaining a factor "R+(w)". In the graph of FIG. 2, the vertical axis indicates R+(w), and the horizontal axis indicates w. In Equation (3) described above, when the coefficient $w_k$ of the input $x_k$ is zero or greater, R+(w) = w is satisfied, and E(w, s) is increased as w increases. On the other hand, when the coefficient $w_k$ of the input $x_k$ is less than zero, R+(w) = +∞ is satisfied, and the cost is made to diverge to positive infinity. In other words, in the case of the spin variable $S_k$ = + 1, the regularization term of the present embodiment causes the cost to diverge to infinity when the coefficient $w_k$ of the input $x_k$ is less than zero. In processing by the regression analysis device, the value is only required to be sufficiently large. In contrast, when the coefficient $w_k$ of the input $x_k$ is zero or greater, the cost is increased consistently with the magnitude of the regression coefficient w. In other words, the first term including R+(w) increases the cost more in an interval where the coefficient is negative than in an interval where the coefficient is positive. Here, when the coefficient $w_k$ is zero or greater, a prediction value y obtained by the regression equation increases as the input $x_k$ of the regression equation shown in Equation (1) increases. In other words, in the case of the spin variable $S_k$ = +1, the cost function is defined in such a manner that the regularization term is small when the prediction value y increases as the value of the input $x_k$ increases, and that the regularization term is large when the prediction value y decreases as the value of the input $x_k$ increases.

FIG. 3 is a schematic diagram for explaining a factor "R_(w)". In the graph of FIG. 3, the vertical axis indicates R_(w), and the horizontal axis indicates w. In Equation (3) described above, when the coefficient $w_k$ of the input $x_k$ is zero or greater, R_(w) = +∞ is satisfied, and the cost is made to diverge to positive infinity. In processing by the regression analysis device, the value is only required to be sufficiently large. On the other hand, when the coefficient $w_k$ of the input $x_k$ is less than zero, R_(w) = -w is satisfied, and E(w) is increased as w increases. In other words, the second term including R_(w) increases the cost more in the interval where the coefficient is positive than in the interval where the coefficient is negative. Here, when the coefficient $w_k$ is less than zero, the prediction value y obtained by the regression equation decreases as the input $x_k$ of the regression equation shown in Equation (1) increases. In other words, the cost function is defined in such a manner that, in the case of the spin variable $S_k$ = -1, the regularization term is small when the prediction value y decreases as the value of the input $x_k$ increases, and the regularization term is large when the prediction value y increases as the value of the input $x_k$ increases.

In other words, Equation (3) takes a sufficiently large value when the regression coefficient $w_k$ is either non-negative or non-positive, depending on the value of the spin variable $S_k$. Then, optimization of the spin variable $S_k$ is achieved by minimizing Equation (2) with respect to w = {$W_0$, $W_1$, ..., $W_K$} and s = {$S_1$, $S_2$, ..., $S_K$}. The parameter w that minimizes E(w, s), and the like can be updated by, for example, a gradient method. In other words, based on a gradient for the variable w and the like of the cost function E(w, s) in one step, the variable w and the like in the subsequent step are updated, and such processing is repeated until w and the like converge. In this way, even if the sign of the coefficient $w_k$ is not determined in advance, the value of the spin variable $S_k$ is appropriately determined, and the sign constraint is adaptively imposed. According to the regularization term as described above, the regression analysis can be performed with a constraint imposed to establish a certain correspondence relationship with the direction of variation of the explanatory variable and the direction of variation of the response variable.

The spin variable $S_k$ is approximated by a continuous variable $u_k$ ($-\infty < u_k < +\infty$). The spin variable $S_k$ can be approximated by the following Equation (4).
[Math. 4]

$$s_k = \tanh(\beta u_k) \quad \cdots (4)$$

The spin variable $S_k$ is expressed by a hyperbolic tangent function. $\beta$ (> 0) is an "inverse temperature parameter". FIG. 4 is a diagram for explaining approximation of the spin variable $S_k$. In the graph of FIG. 4, the vertical axis indicates the spin variable $S_k$, and the horizontal axis indicates the continuous variable $u_k$. Furthermore, the dashed line in the graph indicates $\beta$ = 0.25, the dash-dotted line in the graph indicates $\beta$ = 0.5, the dash-dot-dot line in the graph indicates $\beta$ = 1.0, and the solid line graph indicates $\beta$ = 2. When $\beta$ is $+\infty$, the spin variable $S_k$ in Equation (4) takes one of two values, +1 or -1. When $\beta$ is finite, the spin variable $S_k$ continuously takes a value between -1 and + 1 near the origin.

The error function shown in Equation (3) can be rewritten as follows using w and u = $\{u_1, u_2, ..., u_k\}$.
[Math. 5]

$$E(\mathbf{w},\ \mathbf{u}) = \frac{1}{2N}\sum_{n=1}^{N}\left(y^{(n)} - \sum_{k=0}^{K} w_k x_k^{(n)}\right)^2 + \alpha \sum_{k=1}^{K}\frac{1}{2}\{[1+\tanh(\beta u_k)]R_+(w_k) + [1-\tanh(\beta u_k)]R_-(w_k)\} \quad \cdots (5)$$

The value of the parameter $\alpha$ representing the intensity of regularization can be determined by cross validation or the like. Equation (5) can be differentiated with respect to w and u, and the following gradient method (steepest gradient method) equation can be derived.

[Math. 6]

$$w_k \leftarrow w_k - \eta \frac{\partial E}{\partial w_k}$$

$$= w_k$$

$$- \eta \left[ \frac{1}{N} \sum_{n=1}^{N} \left( \sum_{k=0}^{K} w_k x_k^{(n)} - y^{(n)} \right) x_k^{(n)} \right.$$

$$+ \frac{\alpha}{2} \{ [1 + \tanh(\beta u_k)] g_+(w_k)$$

$$\left. + [1 - \tanh(\beta u_k)] g_-(w_k) \} \right]$$

$$u_k \leftarrow u_k - \eta \frac{\partial E}{\partial u_k}$$

$$= u_k$$

$$- \eta \frac{\alpha}{2} \{ [1 - \tanh^2(\beta u_k)] \beta R_+(w_k)$$

$$- [1 - \tanh^2(\beta u_k)] \beta R_-(w_k) \}$$

$\eta$ is a step width that determines a magnitude for updating the coefficient w in one step (one iteration). $R_\pm(w_k)$ is indifferentiable at $w_k = 0$. Thus, the values $g_+(w_k)$ and $g_-(w_k)$ of "subderivatives" as shown below are used. Note that L is a sufficiently large value.

[Math. 7]

$$g_+(w) = \frac{\partial R_+(w)}{\partial x} = \begin{cases} +1 & \text{when} \quad w > 0 \\ \in [-L,\ +1] & \text{when} \quad w = 0 \\ -L & \text{when} \quad w < 0 \end{cases}$$

$$g_-(w) = \frac{\partial R_-(w)}{\partial x} = \begin{cases} L & \text{when} \quad w > 0 \\ \in [-1,\ L] & \text{when} \quad w = 0 \\ -1 & \text{when} \quad w < 0 \end{cases}$$

The update of $w_k$ and $u_k$ is repeated based on the equation of the steepest gradient method, and the repetition is terminated when the values of $w_k$ and $u_k$ no longer change (minimization is achieved). The value of the inverse temperature parameter $\beta$ is then adjusted in accordance with "simulated annealing". In other words, in repeated calculations of the steepest gradient method, $\beta$ shown in FIG. 4 is initially set to a sufficiently small value, and the value is gradually increased as the repetition proceeds, until the spin variable $S_k$ of Equation (4) substantially takes only two values of $\pm 1$. With respect to how to increase the value of $\beta$ (annealing schedule), for example, a method of multiplying the value of $\beta$ by a fixed number

$\gamma$ larger than 1 for each repetition step ($\beta \leftarrow \gamma\beta$) can be used. As is well-known, if the value of $\beta$ is increased sufficiently moderately, an optimal solution is obtained without getting stuck in local optima with a probability of 1.

As described above, the appropriate sign constraint is imposed on the coefficient w, and the coefficient w converges to a value that contributes to the response variable. Without such a value, the coefficient w approaches zero. In other words, in a case where no value satisfies the sign constraint, a penalty effect is exerted by regularization as shown in FIGS. 2 and 3 to draw back a value that is contrary to the sign constraint, resulting in convergence to zero. Thus, a part of the regression coefficient may be estimated to be zero, similarly to the so-called LASSO. In this way, $s_k$ (k = 1, 2, ..., K) and $w_k$ (k = 1, 2, ..., K) are obtained as a solution of minimization of the error function (5).

Furthermore, by using the obtained $w_k$ as the regression coefficient of the regression equation (1), the output y for the new input $x_{K+1}$ can be predicted. Note that the sign constraint may be determined based on $s_k$ (k = 1, 2, ..., K) obtained as a solution of minimization of the error function (5), and $w_k$ (k = 1, 2, ..., K) may be obtained by signed regularization of the related art. In other words, the regression coefficient $w_k$ is obtained by imposing the non-negative constraint shown in FIG. 2 for the spin variable $S_k > 0$, and imposing the non-positive constraint shown in FIG. 3 for the spin variable $S_k < 0$.

Device Configuration

FIG. 5 is a block diagram illustrating an example of a configuration of a regression analysis device 1 that performs regression analysis described above. The regression analysis device 1 is a computer including a communication interface (I/F) 11, a storage device 12, an input and output device 13, and a processor 14. These components are connected via a bus or the like. The communication I/F 11 may be, for example, a network card or a communication module and communicates with another computer based on a predetermined protocol. The storage device 12 may be a main storage device such as a Random Access Memory (RAM) or a Read Only Memory (ROM), and an auxiliary storage device (secondary storage device) such as a Hard-Disk Drive (HDD), a Solid State Drive (SSD), and a flash memory. The main storage device temporarily stores a program retrieved by the processor 14 and information to be processed by the program. The auxiliary storage device stores a program executed by the processor 14, information to be processed by the program, and the like. In the present embodiment, training data and information representing a constraint condition are temporarily or permanently stored in the storage device 12. The input and output device 13 is a user interface, which is, for example, an input device such as a keyboard and a pointing device, an output device such as a monitor, an input and output device such as a touch panel, or the like. The processor 14 is an arithmetic processing device such as a Central Processing Unit (CPU) and performs each processing according to the present embodiment by executing the program. In an example of FIG. 1, functional blocks are illustrated in the processor 14. In other words, the processor 14 executes a predetermined program to function as a data acquisition unit 141, a regression analysis unit 142, a verification processing unit 143, and an operation processing unit 144.

The data acquisition unit 141 acquires the training data and the information representing the constraint condition from the storage device 12. The regression analysis unit 142 updates the regression coefficient as a solution of minimization of the error function described above, and determines whether the value of the updated regression coefficient has converged. In a case where the value is determined not to have been converged, the regression analysis unit 142 repeats update of the coefficient. In a case where the value is determined to have been converged, for example, the regression analysis unit 142 causes the storage device 12 to store the ultimately generated coefficient. Furthermore, the verification processing unit 143 evaluates a regression equation created based on a predetermined evaluation index. For example, the verification processing unit 143 calculates a coefficient of determination $R^2$ for the result of the cross validation. The operation processing unit 144 calculates a prediction value by using the generated regression equation and, for example, a newly acquired observed value (for example, the K+1-th data in FIG. 1). Furthermore, the operation processing unit 144 may calculate a prediction value for a case where the condition is changed by using the created regression equation and an optional value. Here, the optional value may be a value that is input by a user via, for example, the communication I/F 11 or the input and output device 13. For example, in a case where a plant operation condition is changed, the process state after the change can be predicted.

Regression Analysis Processing

FIG. 6 is a processing flow diagram illustrating an example of regression analysis processing executed by the regression analysis device. The data acquisition unit 141 of the regression analysis device 1 retrieves, from the storage device 12, the training data and the information representing the constraint condition (FIG. 6: S1). In the present step, for example, the values of the input x and the output y as shown in FIG. 1 are retrieved as the training data. Note that the input x is treated as the explanatory variable, and the output y is treated as the response variable. In addition, in FIG. 1, a positive or negative sign registered in association with the input x is retrieved as the information representing the constraint condition. The regression analysis device 1 uses the retrieved sign as the constraint sign described above. Note that in the present embodiment, the regression equation as shown in Equation (1) is used.

Furthermore, the regression analysis unit 142 of the regression analysis device 1 updates the regression coefficient under the above-described sign constraint (FIG. 6: S2). In the present step, the regression analysis unit 142 updates the coefficient w and the parameter s (specifically, for example, the parameter "u" of Equation (5)) to minimize the cost function E(w, s) shown in Equation (2), for example. Specifically, the regression analysis unit 142 can update the coefficient w and the like based on the equation of the steepest gradient method described above.

The regularization term of the cost function E(w, s) according to the present embodiment is defined to increase the cost in a case where the adaptively imposed constraint condition is not satisfied. In other words, the regularization term reduces the value of the cost function E(w, s) when the direction of variation in explanatory variable has a plausible correspondence relationship with the direction of variation of the response variable. Furthermore, in a case where the coefficient w does not converge to a value that satisfies the constraint condition, the regression analysis unit 142 zeros the coefficient. In this manner, the explanatory variable may be selected.

Furthermore, the regression analysis unit 142 of the regression analysis device 1 determines whether all of the coefficient w and the like have been converged or zeroed (FIG. 6: S3). In the present step, the regression analysis unit 142 determines that the updated coefficient w and the like have converged in a case where the gradients of the updated coefficient w and the like approach zero sufficiently. Specifically, the regression analysis unit 142 determines that the coefficient w and the parameter u have converged when the values of the coefficient w and the parameter u no longer change in the equation of the steepest gradient method described above.

In a case where the coefficient w and the like are determined not to have been converged or zeroed (S3: NO), the step returns to S2 and the processing is repeated. On the other hand, in a case where the coefficient w and the like are determined to have been converged or zeroed (S3: YES), the regression analysis unit 142 stores the regression equation in the storage device 12 (FIG. 6: S4). In the present step, the regression analysis unit 142 causes the storage device 12 to store the updated coefficient w and the like.

Alternatively, the verification processing unit 143 of the regression analysis device 1 may verify the accuracy of the created regression equation (FIG. 6: S5). In the present step, the verification processing unit 143 verifies, by using test data, the accuracy of the regression equation, for example, by cross validation. The verification processing unit 143 can perform verification based on a predetermined evaluation index such as a correlation coefficient or a coefficient of determination. Note that the present step may be omitted.

Furthermore, the operation processing unit 144 of the regression analysis device 1 performs operation processing by using the created regression equation (FIG. 6: S6). In the present step, the operation processing unit 144 calculates a prediction value of the output y for a new input x, as a record having a data number $t_{T+1}$ shown in FIG. 1, for example. Note that the present step may be performed by a device (not illustrated) other than the regression analysis device 1, using the regression equation stored in S4.

Examples

The regression analysis processing according to the present technology was applied to sensing data obtained from a chemical process plant. The number N of pieces of data to be learned was 14, and 14 sets of input x and output y were prepared. Each set includes 12 inputs x and one output y. Furthermore, the constructed regression equation was evaluated by leave-one-out cross validation (LOOCV). In other words, N - 1 pieces out of the N pieces of data were used as training data, and the remaining one piece was used as an evaluation datum. Verification is repeated N times such that each of all the 14 data is used once as evaluation data. Then, a coefficient of determination ($R^2$) is calculated from the results of N verification processes. The coefficient of determination ($R^2$) is an index representing the accuracy of prediction, and is given by the following Equation (8).

[Math. 8]

$$R^2 = 1 - \frac{\sum_{n=1}^{N}\left(y^{(n)} - \mu^{(n)}\right)}{\sum_{n=1}^{N}\left(y^{(n)} - \bar{\mu}\right)} \quad \cdots (8)$$

w0(n), w1(n), ..., wK(n) are regression coefficients determined by learning when the n-th data is used as an evaluation datum.

The present embodiment was applied to various values of $\alpha$, and the coefficient of determination $R^2$ was calculated by LOOCV. Similar verification was performed by L1 regularization (Lasso) and the least-square method. FIG. 7 is a diagram showing verification results. The solid line indicates the coefficient of determination $R^2$ of the regression equation created according to the present embodiment. The dashed-dotted line indicates the coefficient of determination $R^2$ of the regression equation created by L1 regularization. The horizontal dashed line indicates the coefficient of determination $R^2$ by the least-square method (not including the parameter $\alpha$). In the case of the present embodiment,

$\alpha$ of 0.0001 or less resulted in a high $R^2$ value of 0.6 or more. In the case of L1 regularization, $\alpha$ of 0.0001 resulted in an $R^2$ value (about 0.8) equivalent to that in the present embodiment. However, $\alpha$ of larger or smaller than this value causes the $R^2$ value obtained by L1 regularization to fall rapidly to the vicinity of zero. From the above, it is understood that the present embodiment can stably ensure a higher prediction performance (generalization performance) than L1 regularization. Furthermore, the present embodiment and L1 regularization achieved higher prediction performance than the least-square method.

Note that, as shown in FIG. 7, the prediction performance exerted by L1 regularization is maximized when $\alpha$ is a specific value (around 0.00011 in the example of FIG. 7), and rapidly decreases when the value of $\alpha$ is larger or smaller than the specific value. This means that the prediction performance demonstrated by using L1 regularization is sensitive to the value of $\alpha$. Thus, in order to produce the effect by L1 regularization, tuning the parameter $\alpha$ by cross validation or the like is indispensable.

In contrast, the prediction performance achieved by using the present embodiment is maximized when $\alpha$ is a specific value (in the vicinity of 0.00011 in the example of FIG. 7), but even $\alpha$ with a smaller value does not degrade the prediction performance as much as in the case of L1 regularization. Therefore, even if the value of $\alpha$ is set to zero a priori without undergoing cross validation, sufficiently high prediction performance can be ensured. The cross validation is a computation-intensive procedure, and thus the present embodiment allows sufficient prediction performance to be achieved without the cross validation by setting the value of $\alpha$ to zero from the beginning.

Second Embodiment

In the present embodiment, the spin variable $s_k$ is not approximated by a continuous variable but is treated as a random variable. In other words, instead of Equation (4) in the first embodiment, the spin variable $s_k$ strictly takes only a value of +1 or -1, and which value is taken is stochastically determined. Hereinafter, differences from the first embodiment will be mainly described.

In the learning by the steepest descent method, an amount determined by the following Expression (9) is defined.

[Math. 9]

$$\rho = \frac{1}{1 + e^{-\beta w_k}} \qquad \cdot\cdot\cdot (9)$$

where $\beta$ (> 0) represents an "inverse temperature parameter".

Furthermore, the spin variable $s_k$ (k = 1, 2, ..., K) is updated in accordance with the following rules.

(i) Generate a uniform random number r in the range of [0,1].
(ii) If $\rho \geq r$, $s_k = 1$;
(iii) else if $\rho < r$, $s_k = -1$.

In other words, first, a uniform random number r is generated in the range of 0 or more and 1 or less. Second, in a case where the value of $\rho$ determined by Equation (9) is equal to or greater than r, the spin variable $s_k$ is set to +1. Third, in a case where the value of $\rho$ determined by Equation (9) is less than r, the spin variable $s_k$ is set to -1.

The minimization (learning) of the error function shown in Equation (2) is performed in the following procedure. The regression coefficient $w_k$ can be minimized by the steepest descent method. In each step, the regression coefficient $w_k$ is updated by the following equation (10). This is similar to the normal steepest descent method.

[Math. 10]

$$w_k \leftarrow w_k - \eta \frac{\partial E}{\partial w_k}$$

$$= w_k$$

$$- \eta \left[ \frac{1}{N} \sum_{n=1}^{N} \left( \sum_{k=0}^{K} w_k x_k^{(n)} - y^{(n)} \right) x_k^{(n)} + \frac{\alpha}{2} \{ [1 + s_k] g_+(w_k) + [1 - s_k] g_-(w_k) \} \right]$$

$$\cdots (10)$$

Here, $g_+(w_k)$ and $g_-(w_k)$ are the "subderivatives " described in the first embodiment. Next, the spin variable $s_k$ is updated based on the rules (i) to (iii). A single step (step S2 in FIG. 6) includes the update of the regression coefficient $w_k$ according to Equation (10) and the update of the spin variable $s_k$ according to the rules (i) to (iii), and learning is executed by repeating this step.

As in the first embodiment, the value of the inverse temperature parameter $\beta$ is adjusted according to the "simulated annealing method".

The second embodiment as described above also does not require the constraint condition to be determined in advance, and can provide a more versatile technique for constructing a regression model having a correspondence relationship between variation of the explanatory variable and variation of the response variable.

Modified Examples

The configuration of the computer illustrated in FIG. 5 is an example, and the present disclosure is not limited to such an example. For example, at least some of the functions of the regression analysis device 1 may be distributed to a plurality of devices, and a regression analysis system may be provided that realizes the above-described processing as a whole. For example, for at least some of the functions of the regression analysis device 1, a regression analysis system may be provided that includes a plurality of devices executing an identical function in parallel. Furthermore, at least some of the functions of the regression analysis device 1 may be provided on a so-called cloud. Furthermore, the regression analysis device 1 need not include some configurations such as the verification processing unit 143, for example. Furthermore, a system may be provided that holds a created trained model and includes only the operation processing unit 144.

In addition, the cost function shown in Equation (2) is assumed to perform the L1 regularization on either positive or negative interval but also operates by L2 norm or other convex functions. That is, instead of the sum of the absolute values of the coefficients, a term that imposes a square sum of the coefficients or another penalty on either positive or negative interval may be used.

The parameter $S_k$ included in the regularization term is not limited to the spin variable, and only needs to be a binary variable for zeroing either the first term "(1/2) (1 + $s_k$) $R_+(w_k)$" or the second term "(1/2) (1 - $s_k$) $R_-(w_k)$" included in the regularization term or approximating either the first term or the second term to zero. For example, the parameter $S_k$ may be a binary variable that takes either 0 or +1. In this case, $R_{ASL}(w_k, s_k)$ in Equation (3) may be defined as follows.

[Math. 11]

$$R_{\mathrm{ASL}}(w_k,\ s_k) = s_k R_+(w_k) + (1 - s_k) R_-(w_k)$$

In this case, the continuous variable for approximating the binary variable can utilize a sigmoid function. Furthermore, a binary variable taking two values other than the above can also be approximated by a function representing an S-shaped growth curve, for example. However, the use of the spin variable taking +1 or -1 as in the above-described embodiment provides high predictability for mathematical-expression transformation, and also improves the readability of the code for implementing the present function.

Furthermore, details of the data to be analyzed by the regression analysis device 1 are not particularly limited. The present embodiment may be applied not only to prediction of characteristic values such as quality in manufacturing industries producing chemicals and others as described in Examples, but also to process control for machining or the like, diagnosis, and the like and to non-manufacturing industries such as power generation and discharge treatment and other various fields. For example, information including sensing data or the like output from a production facility can be used as an explanatory variable to predict, as a response variable, a predetermined characteristic value representing a mechanical, physical, or chemical property, a preferable operation condition depending on the situation, the degree of abnormality, or the like. Furthermore, in a non-manufacturing industry, various types of information may be used as explanatory variables to predict a preferable operation condition for the facility.

Furthermore, the present disclosure includes a method and a computer program for performing the aforementioned processing, and a computer readable recording medium storing the program. The recording medium on which the program is stored enables the aforementioned processing by causing a computer to execute the program.

The computer readable recording medium refers to a recording medium that can accumulate information such as data or programs by electrical, magnetic, optical, mechanical, or chemical actions and can be read from a computer. Among such recording media, examples of recording media detachable from a computer include flexible disks, magneto-optical disks, optical disks, magnetic tapes, memory cards, and the like. Furthermore, as recording media fixed to a computer, there are HDD, Solid State Drive (SSD), ROM, and the like.

Each of the configurations, combinations thereof, and the like in each of the embodiments is an example, and various additions, omissions, substitutions, and other changes of the configurations may be made as appropriate without departing from the spirit of the present disclosure. The present disclosure is not limited by the embodiments and is limited only by the claims. Each embodiment disclosed in the present specification can be combined with any other feature disclosed herein.

Reference Signs List

1: Regression analysis device
11: Communication I/F
12: Storage device
13: Input and output device
14: Processor
141: Data acquisition unit
142: Regression analysis unit
143: Verification processing unit
144: Operation processing unit

## Claims

**1.** A regression analysis method comprising:

retrieving, by a computer, training data from a storage device storing the training data, the training data being used as a response variable and an explanatory variable of a regression model; and
performing, by the computer, machine learning by the regression model using the training data to minimize a cost function including a regularization term,
wherein the regularization term includes
a first term that increases a cost more in an interval where a coefficient of the explanatory variable is positive than in an interval where the coefficient is negative, and
a second term that increases the cost more in the interval where the coefficient is negative than in the interval where the coefficient is positive.

**2.** The regression analysis method according to claim 1, wherein

the first term and the second term include a parameter for zeroing either the first term or the second term or approximating either the first term or the second term to zero, and

the parameter and a regression coefficient in the regression model are repeatedly updated in the machine learning.

**3.** The regression analysis method according to claim 2, wherein
the parameter is a binary variable, and the parameter constitutes a factor of the first term, the factor being zero in a case where the parameter takes one of two values of the binary variable, and constitutes a factor of the second term, the factor being zero in a case where the parameter takes the other of the two values of the binary variable.

**4.** The regression analysis method according to claim 3, wherein
on the assumption that the binary variable is a value that approximates a growth curve, the regression coefficient and the parameter are calculated to minimize the cost function.

**5.** The regression analysis method according to claim 3 or 4, wherein
on the assumption that the binary variable is a value determined based on a magnitude relationship between a predetermined value represented by using the regression coefficient and a random variable, the regression coefficient and the parameter are calculated to minimize the cost function.

**6.** A regression analysis system comprising
one or more computers configured to execute the regression analysis method described in any one of claims 1 to 5.

**7.** A regression analysis program causing one or more computers to execute the regression analysis method described in any one of claims 1 to 5.

K

| DATA NUMBER | INPUT | | | | OUTPUT |
|---|---|---|---|---|---|
| | $x_1$ | $x_2$ | … | $x_K$ | $y$ |
| $t_1$ | $x_1(t_1)$ | $x_2(t_1)$ | … | $x_K(t_1)$ | $y(t_1)$ |
| … | … | … | … | … | … |
| $t_T$ | $x_1(t_T)$ | $x_2(t_T)$ | … | $x_K(t_T)$ | $y(t_T)$ |
| $t_{T+1}$ | $x_1(t_{T+1})$ | $x_2(t_{T+1})$ | … | $x_K(t_{T+1})$ | ? |
| … | … | … | … | … | … |

T

FIG. 1

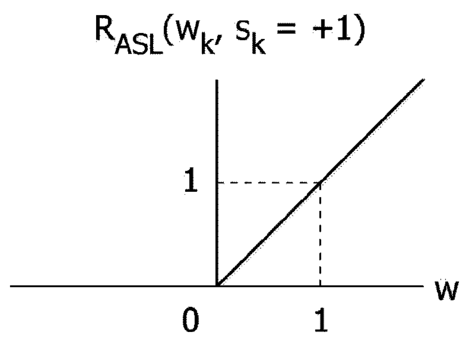


FIG. 2

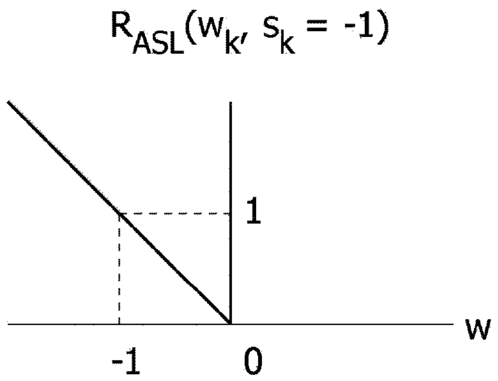


FIG. 3

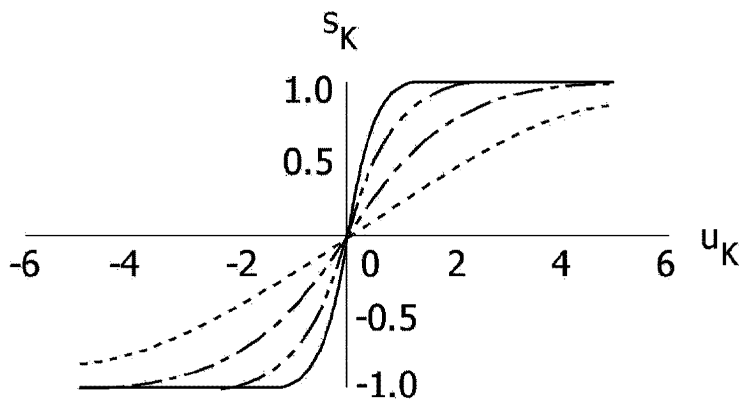


FIG. 4

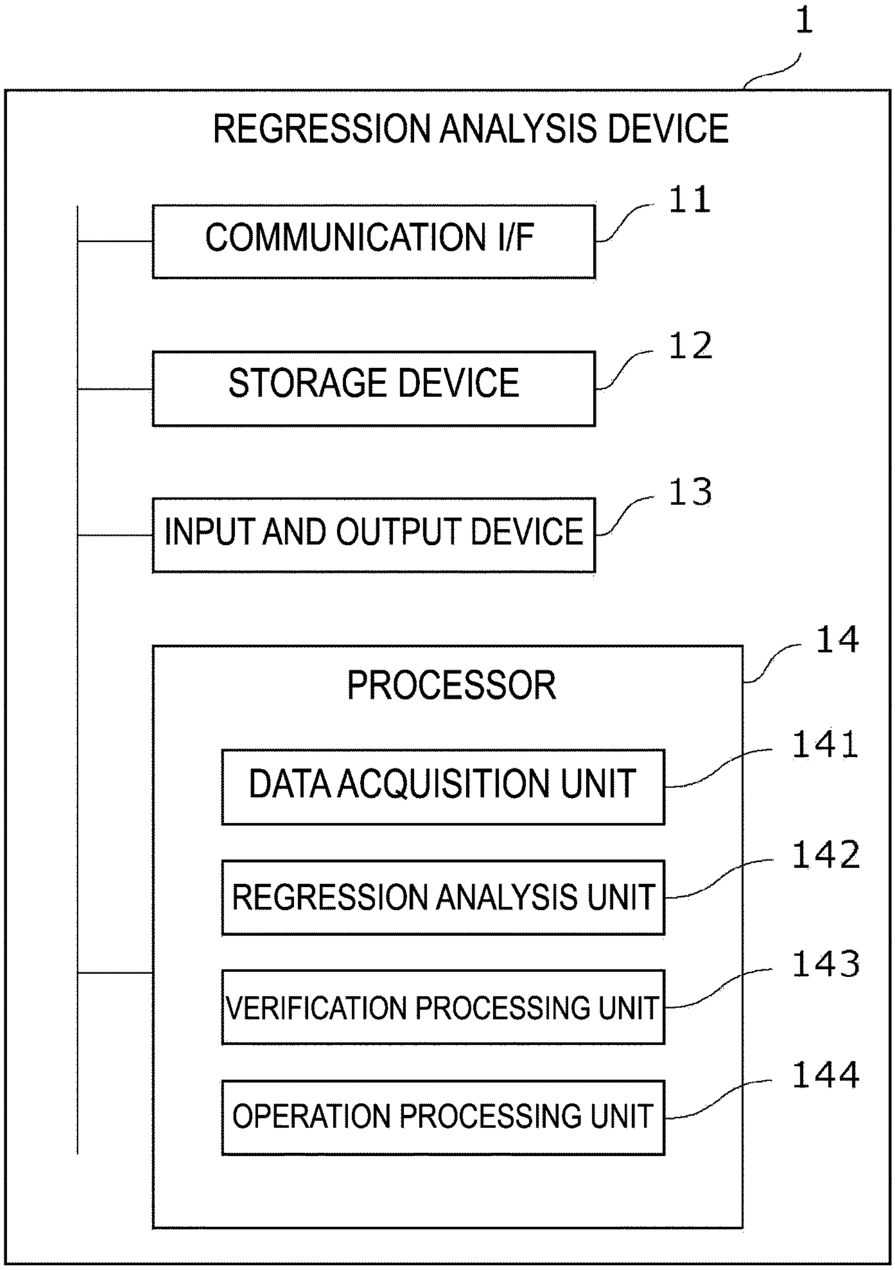
1
REGRESSION ANALYSIS DEVICE
COMMUNICATION I/F
11
STORAGE DEVICE
12
INPUT AND OUTPUT DEVICE
13
PROCESSOR
14
DATA ACQUISITION UNIT
141
REGRESSION ANALYSIS UNIT
142
VERIFICATION PROCESSING UNIT
143
OPERATION PROCESSING UNIT
144

FIG. 5

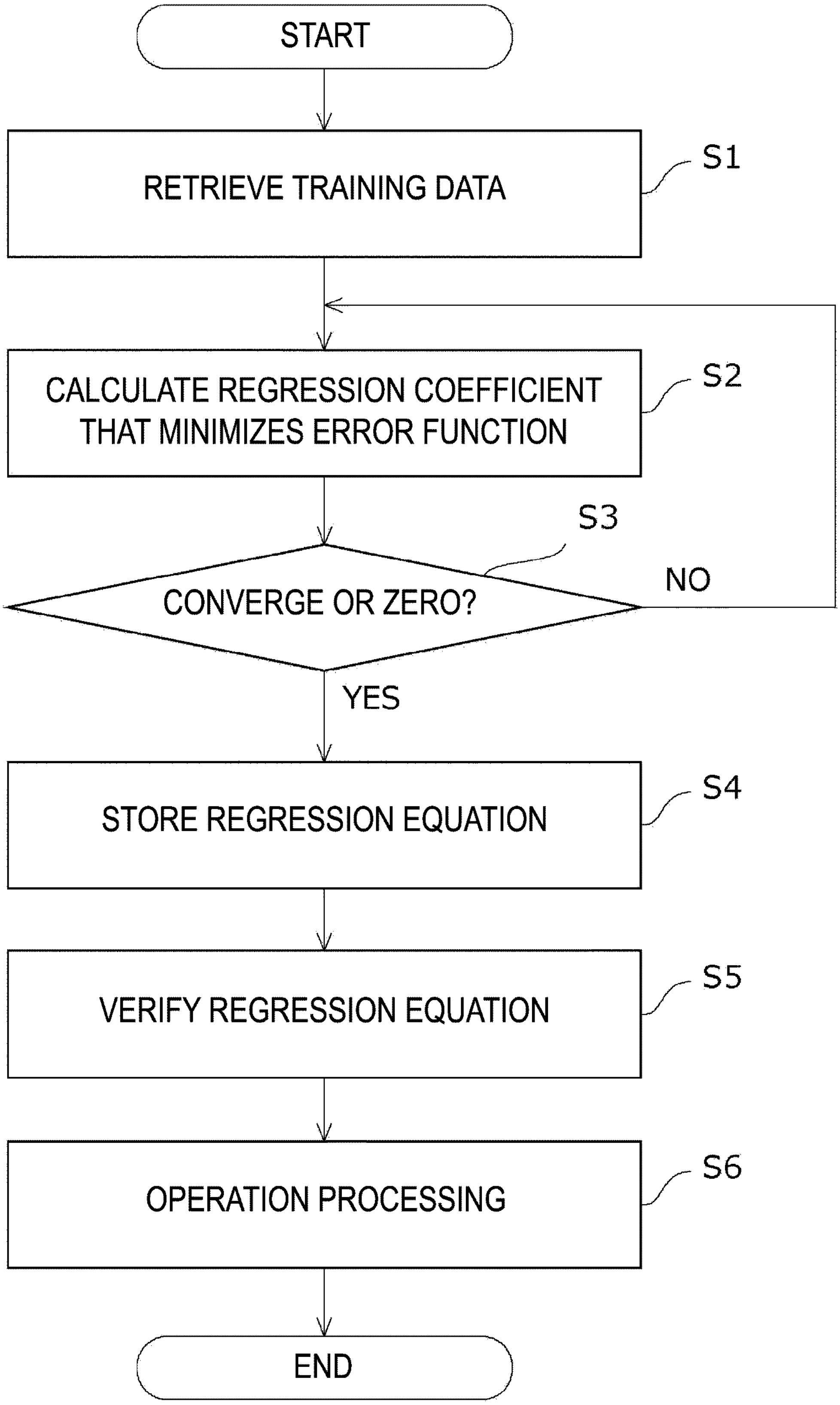
START
RETRIEVE TRAINING DATA
S1
CALCULATE REGRESSION COEFFICIENT THAT MINIMIZES ERROR FUNCTION
S2
S3
CONVERGE OR ZERO?
NO
YES
STORE REGRESSION EQUATION
S4
VERIFY REGRESSION EQUATION
S5
OPERATION PROCESSING
S6
END

FIG. 6

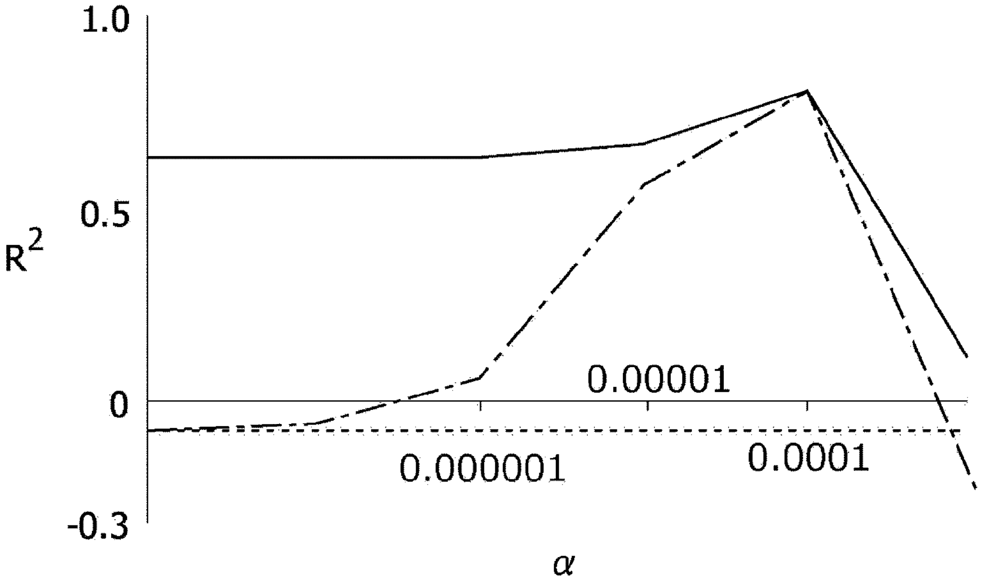


FIG. 7

## INTERNATIONAL SEARCH REPORT

International application No.
**PCT/JP2024/001293**

**A. CLASSIFICATION OF SUBJECT MATTER**

***G06N 20/00***(2019.01)i
FI: G06N20/00 130

According to International Patent Classification (IPC) or to both national classification and IPC

**B. FIELDS SEARCHED**

Minimum documentation searched (classification system followed by classification symbols)

G06N20/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2021/157669 A1 (THE UNIVERSITY OF TOKYO) 12 August 2021 (2021-08-12) entire text, all drawings | 1–7 |
| A | WO 2021/033281 A1 (NEC CORPORATION) 25 February 2021 (2021-02-25) entire text, all drawings | 1–7 |
| A | JP 2020-204841 A (KABUSHIKI KAISHA TOSHIBA) 24 December 2020 (2020-12-24) entire text, all drawings | 1–7 |

☐ Further documents are listed in the continuation of Box C.
☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 March 2024** | **26 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/001293**

| Patent document cited in search report | Publication date (day/month/year) | Patent family member(s) | Publication date (day/month/year) |
|---|---|---|---|
| WO 2021/157669 A1 | 12 August 2021 | US 2023/0059056 A1<br>entire text, all drawings<br>EP 4102420 A1<br>CN 115053216 A | |
| WO 2021/033281 A1 | 25 February 2021 | US 2022/0285030 A1<br>entire text, all drawings | |
| JP 2020-204841 A | 24 December 2020 | US 2020/0393799 A1<br>entire text, all drawings | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2021157670 A

### Non-patent literature cited in the description

- **ROBERT TIBSHIRANI**. Regression Shrinkage and Selection via the Lasso. *Journal of the Royal Statistical Society. Series B (Methodological)*, 1996, vol. 58 (1), 267-288